# FASCICULE DE BREVET EUROPEEN

(11) **EP 1 268 265 B1**
(45) Date de publication et mention de la délivrance du brevet: **24.06.2009**
(21) Numéro de dépôt: 01919601.3
(22) Date de dépôt: 30.03.2001
(51) Int. Cl.: B62K 21/18, B62K 19/16, B62K 21/04

(54) **FOURCHE DE BICYCLETTE ET PIVOT POUR UNE TELLE FOURCHE**
FAHRRADGABEL UND GABELDREHPUNKT
BICYCLE FORK AND PIVOT FOR SAME

(30) Priorité: 05.04.2000 FR 0004320
(43) Date de publication de la demande: 02.01.2003
(73) Titulaire: TIME SPORT INTERNATIONAL, 58649 Varennes-Vauzelles (FR)
(72) Inventeur: GUEUGNEAUD, Jean-Marc, F-38110 Saint Clair de la Tour (FR)
(74) Mandataire: Michardière, Bernard
(86) Numéro de dépôt international: PCT/FR2001/000960
(87) Numéro de publication internationale: WO 2001/074654

(56) Documents cités:
- DE-A- 3 804 342
- DE-U- 29 920 238
- US-A- 4 828 285

## Description

L'invention est relative à une fourche de bicyclette, prévue pour être montée dans une douille de cadre de bicyclette, fourche du genre de celles qui comprennent une tête de fourche d'où partent deux fourreaux et, du côté opposé aux fourreaux, un pivot tubulaire comportant une partie basse cylindrique solidaire de la tête de fourche, et une partie haute cylindrique pour la fixation d'une potence.

On sait que, dans une bicyclette, le pivot de fourche est monté à rotation dans une douille du cadre de la bicyclette, généralement par l'intermédiaire de deux roulements prévus respectivement en bas et en haut de la douille. Le cycliste, en agissant sur un guidon fixé à l'extrémité de la potence, peut ainsi orienter la fourche, et la roue avant, dans une direction souhaitée.

DE 38 04 342 montre une fourche de bicyclette dont la tête comporte une saillie tronconique dans laquelle est engagé et fixé un tube cylindrique. Cette saillie tronconique vise à assurer une résistance suffisante au niveau de l'assemblage du tube cylindrique formant pivot et de la tête de fourche. La potence est fixée par un système à expandeur en prise dans le tube.

La zone de liaison entre le pivot et la tête de fourche constitue un point névralgique, particulièrement sollicité mécaniquement.

US 4 828 285 montre un ensemble de fourche de bicyclette en matériau composite comportant à son extrémité supérieure une partie cylindrique de diamètre constant, appelée « pivot ». La potence doit aussi être fixée par un système à expandeur.

L'invention a pour but, surtout, de procurer une fourche de bicyclette présentant, dans la zone de liaison de la tête de fourche et du pivot, une rigidité satisfaisante et une solidité améliorée assurant une meilleure sécurité à l'utilisateur, grâce à une meilleure répartition des contraintes en partie basse du pivot, sans qu'il en résulte une augmentation du poids de la fourche.

Selon l'invention, une fourche de bicyclette du genre défini précédemment est caractérisée par le fait que :
- la partie haute cylindrique est prévue pour sortir de la douille de cadre et pour être entourée par la potence,
- le diamètre extérieur de la partie basse cylindrique du pivot est supérieur au diamètre extérieur de la partie haute cylindrique de ce pivot, et une zone de transition assure la liaison entre les deux parties de diamètres différents du pivot,
- la zone de transition du pivot présente une surface extérieure tronconique dont le diamètre extérieur diminue de bas en haut
- et la fourche est réalisée en matériau composite, d'une seule pièce avec le pivot.

Cette solution permet de renforcer la zone de liaison entre la tête de fourche et le pivot, sans pour autant entraîner une augmentation de poids sensible car la partie haute du pivot conserve un diamètre extérieur réduit n'entraînant pas de modification sensible du poids de l'ensemble du pivot et de la potence.

On désigne par l'expression « matériau composite » un matériau constitué de fibres à haute résistance mécanique, notamment fibres de carbone ou de verre, noyées dans une matrice de résine. Les pièces fabriquées en un tel matériau sont généralement moulées.

De préférence, le pivot présente une cavité intérieure cylindrique à section intérieure circulaire dont le diamètre reste constant de bas en haut suivant toute la longueur du pivot et deux cloisons diamétrales à angle droit sont prévues dans la cavité cylindrique pour renforcer le pivot.

De préférence, le diamètre de la partie haute du pivot est égal à un diamètre standard de pivot de bicyclette, en particulier 25,4 mm ou 28,6 mm. Le diamètre de la partie basse du pivot est supérieur d'au moins 5% (cinq pour cent), avantageusement d'au moins 12% (douze pour cent), au diamètre de la partie haute.

La surface extérieure de la zone de liaison entre le pivot et la tête de fourche comporte avantageusement une surface tronconique pour servir d'appui à une surface conjuguée d'une bague intérieure de roulement.

Avantageusement, les fibres du matériau composite sont continues dans la zone de liaison.

L'invention consiste, mises à part les dispositions exposées ci-dessus, en un certain nombre d'autres dispositions dont il sera plus explicitement question ci-après à propos d'exemples de réalisation décrits en détail avec référence aux dessins annexés, mais qui ne sont nullement limitatifs. Sur ces dessins :
Fig.1 est une vue schématique en perspective d'une direction de bicyclette.
Fig. 2 est une demi-coupe verticale et une demi-vue en extérieur de la zone de liaison du pivot et de la tête de fourche selon l'invention, partiellement représentée.
Fig.3 est une coupe verticale, avec parties arrachées, du pivot et de la tête de fourche ainsi que de la douille du cadre logeant le pivot.
Fig. 4 est une vue en perspective d'une coupe verticale de la fourche partiellement représentée et du pivot.
Fig. 5, enfin, est une coupe schématique verticale d'une variante de la zone de liaison entre pivot et tête de fourche.

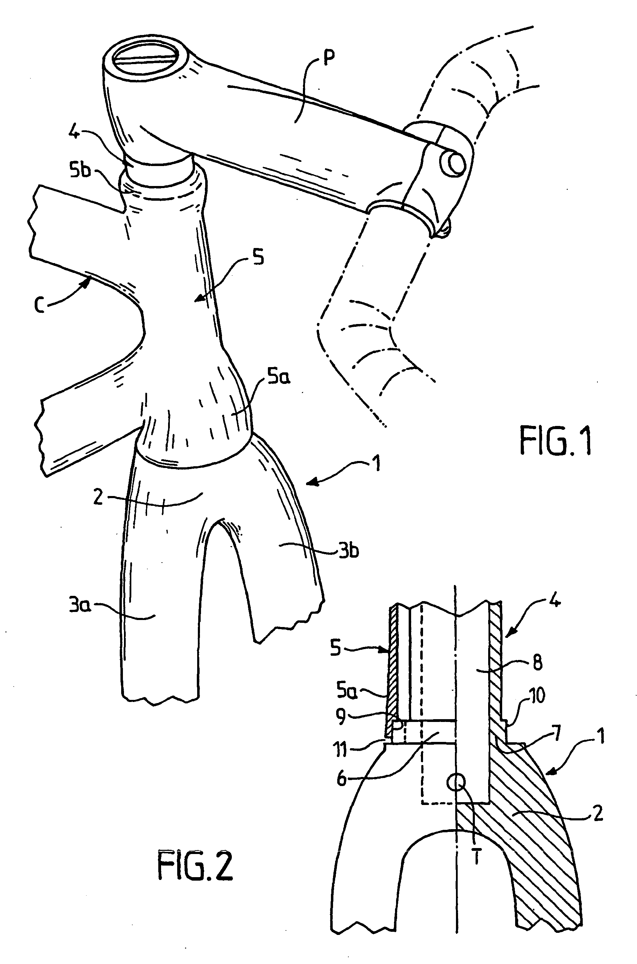

En se reportant à Fig.1 des dessins on peut voir une fourche de bicyclette 1 comprenant une tête de fourche 2 d'où partent deux fourreaux 3a, 3b partiellement représentés. De manière usuelle, chaque fourreau est muni à son extrémité inférieure (non visible) d'une patte pour la fixation de l'axe de la roue avant qui passe entre les fourreaux.

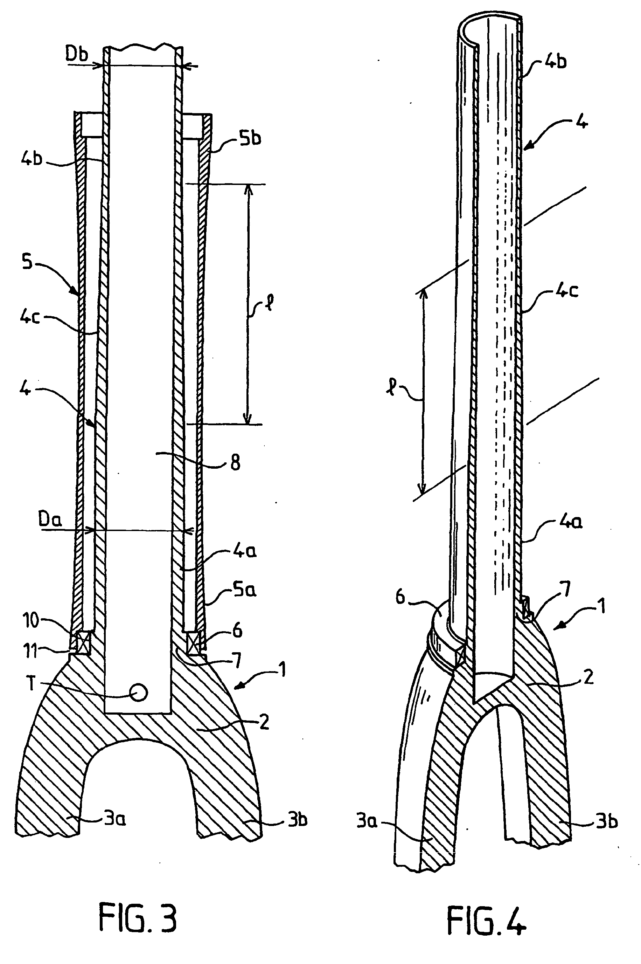

La fourche 1 comprend un pivot 4 tubulaire qui, comme visible sur les Figs. 3 et 4, comporte une partie basse 4a cylindrique à section circulaire, solidaire de la tête de fourche 2 et une partie haute 4b cylindrique à section circulaire pour la fixation d'une potence P. Le diamètre extérieur des parties 4a, 4b, est constant.

Les expressions "partie basse", "partie haute", "bas", "haut" , doivent bien entendu être comprises comme s'appliquant à une bicyclette en position verticale de roulage.

La fourche 1 est montée à rotation dans une douille 5 du cadre C de bicyclette, généralement à l'aide d'un premier palier prévu en partie basse entre la douille 5 et le pivot 4 et d'un second palier (non représenté) prévu en partie haute de la douille 5. Dans l'exemple illustré, le premier palier est formé par un roulement 6 schématiquement représenté. Généralement, le deuxième palier est également formé par un roulement. Les deux paliers peuvent cependant être des paliers lisses.

La zone de liaison 7 entre la tête 2 de fourche et le pivot 4 constitue un point névralgique pour lequel on souhaite une répartition des contraintes aussi bonne que possible. La partie haute 4b du pivot par contre est soumise à des sollicitations moins fortes.

Le diamètre extérieur Da de la partie basse cylindrique 4a du pivot est supérieur au diamètre extérieur Db de la partie haute 4b du pivot. Ces deux diamètres différents Da, Db, sont prévus sur une seule et même pièce, le pivot 4.

Une zone de transition 4c assure la liaison entre les deux parties 4a, 4b. Cette zone de transition 4c présente une surface extérieure tronconique dont le diamètre diminue de bas en haut. La zone 4c s'étend sur une longueur 1 relativement grande, en particulier supérieure à 5 cm.

Actuellement, deux diamètres extérieurs de pivot de fourche font office de standard dans le domaine du cyclisme. Un premier diamètre de 25,4 mm est généralement utilisé pour le cyclisme sur route, tandis qu'un diamètre plus fort de 28,6 mm est utilisé pour les bicyclettes VTT dont les fourches sont soumises à des contraintes plus élevées. Ce diamètre plus important de 28,6 mm permet une meilleure répartition des contraintes sur les roulements, et un aspect plus en accord avec les cadres ayant des tubes surdimensionnés.

Le diamètre Db de la partie haute peut être égal à l'un des diamètres standards de pivot pour le cyclisme, soit 25,4 mm ou 28,6 mm actuellement. Bien entendu la valeur du diamètre Db n'est pas figée et peut être choisie selon des exigences variables, en particulier selon des standards variables.

Le diamètre Da de la partie basse est de préférence supérieur d'au moins 5% , avantageusement d'au moins 12 %, au diamètre Db de la partie haute.

Le diamètre Da plus important permet, dans le cas d'une fourche réalisée en matériau composite, de faire passer davantage de fibres du pivot 4 à la tête de fourche 2 dans la zone de liaison 7 située radialement à l'intérieur du roulement ou palier 6. Dans le cas d'un pivot 4 métallique, le diamètre Da plus important assure une augmentation de l'inertie et améliore aussi le comportement de la fourche.

Le pivot 4 comporte une cavité intérieure cylindrique 8 à section intérieure circulaire dont le diamètre reste constant suivant toute la longueur du pivot. La variation d'épaisseur du pivot est due uniquement à la variation du diamètre extérieur. Vers l'extrémité inférieure de la cavité cylindrique 8 , un trou T d'axe perpendiculaire au plan moyen de la fourche traverse la tête de fourche , pour la fixation d'un étrier de frein.

Deux cloisons diamétrales à angle droit, formant une croix, peuvent être prévues dans le logement 8 pour renforcer le pivot, notamment lorsqu'il est réalisé en matériau composite. Le plan moyen de l'une des cloisons est situé dans le plan longitudinal de symétrie de la fourche.

La fourche 1 est avantageusement prévue pour une direction intégrée, illustrée sur Figs. 1 à 3. Les cuvettes de direction des roulements inférieur et supérieur, invisibles, sont logées dans les extrémités 5a, 5b, de plus fort diamètre, de la douille 5.

Une portée intérieure 9 (Fig.2) est usinée dans l'extrémité inférieure 5a pour l'appui de la bague extérieure du roulement 6. La bague intérieure de ce roulement est en appui contre une portée intérieure 10 usinée sur la tête 2 à la base du pivot 4. Un jeu minimum 11 existe entre le bord inférieur de la douille 5 et la tête de fourche.

Le pivot de l'invention permet de conserver les avantages du plus fort diamètre au niveau de la liaison avec la tête de fourche, sans alourdissement excessif puisqu'il est possible, en partie haute, de monter une potence correspondant à un plus petit diamètre de pivot, suffisant pour les contraintes existant à cet endroit.

Le roulement 6 est avantageusement fabriqué sous forme compacte de manière à permettre de réaliser, avec un même roulement, une direction utilisant soit un pivot de diamètre extérieur constant pour cyclisme sur route, généralement de 25,4 mm, soit un pivot de diamètre extérieur constant pour VTT, généralement de 28,6 mm, soit le pivot selon l'invention. Pour cela, la bague interne du roulement présente un diamètre intérieur prévu pour le pivot de plus fort diamètre, et un diamètre extérieur compatible avec une douille de cadre associé à un pivot de petit diamètre, pour le cyclisme sur route.

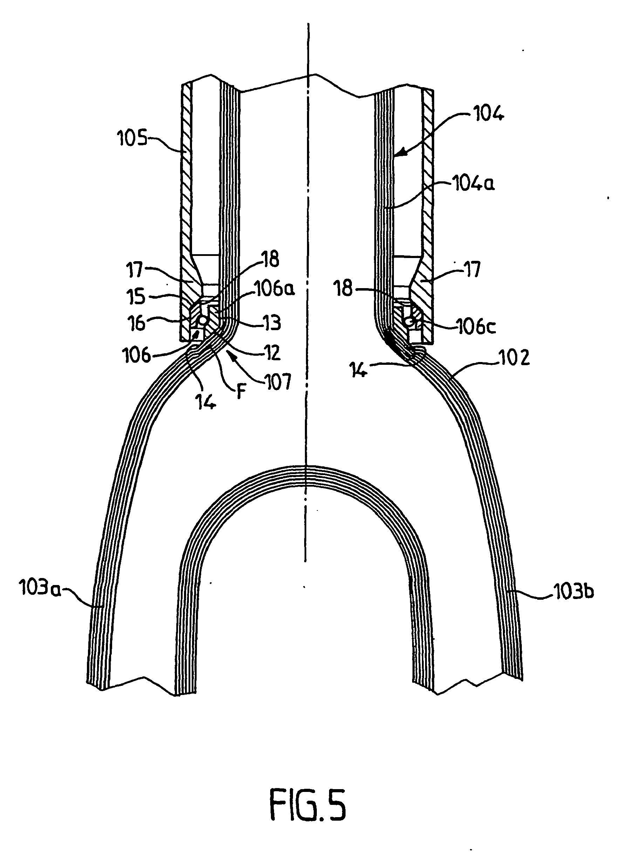

En se reportant à Fig. 5, on peut voir une variante de réalisation particulièrement avantageuse de la zone de liaison 107 entre le pivot 104 et la tête de fourche 102. Les différents éléments jouant des rôles semblables à des éléments déjà décrits précédemment sont désignés par une référence égale à la somme de la référence précédente et du nombre 100.

Sur Fig. 5 seule la partie basse 104a du pivot est représentée. Le diamètre extérieur de la partie haute (non représentée) du pivot 104 est inférieur à celui de cette partie basse 104a.

Le roulement 106 comprend une bague intérieure 106a, une bague extérieure 106b, et des organes de roulement 106c, en particulier des billes, disposés entre des chemins de roulement prévus dans les bagues.

La bague intérieure 106a présente, vers l'intérieur dans le sens radial, une surface d'appui inférieure oblique 12 tronconique dont les génératrices sont inclinées sur l'axe géométrique du roulement, avantageusement suivant un angle de 45°. La surface intérieure dans le sens radial de la bague 106a se prolonge vers le haut, au-delà de la petite base de la surface tronconique 12, par une surface cylindrique 13 dont le diamètre intérieur a même valeur que le diamètre extérieur de la partie 104a du pivot qui sert de guide.

La surface extérieure de la partie 104a est prolongée vers le bas par une surface tronconique 14 dont le diamètre augmente vers le bas. La surface tronconique 14 appartient à la surface extérieure de la zone de liaison 107. L'inclinaison des génératrices de la surface 14 sur l'axe géométrique de la fourche est la même que celle des génératrices de la surface 12 qui s'applique et bute contre la surface 14.

La bague extérieure 106b présente une surface extérieure, dans le sens radial, comportant une partie haute 15 avec une surface tronconique extérieure dont le diamètre diminue vers le haut, et une partie basse 16 cylindrique de même diamètre que la surface cylindrique interne de la douille 105 du cadre. L'inclinaison des génératices de la surface 15 sur l'axe géométrique du roulement est avantageusement de 45°. Un épaulement 17 faisant saillie vers l'intérieur de la douille 105 est prévu avec une surface tronconique 18 d'appui, conjuguée de la surface 15 qui vient s'appliquer contre.

La zone de liaison 107 avec surface oblique 14 assure une transition progressive de la partie basse 104a du pivot à la tête de fourche 102. Dans le cas d'un pivot 104 et d'une tête de fourche 102 d'une seule pièce en matériau composite il est possible, grâce à l'appui oblique entre les surfaces 12 et 14, de faire passer de nombreuses fibres continues F sous le roulement 106, du pivot 104 à la tête de fourche 102. On évite l'usinage d'une portée telle que 10 sur Fig.2, avec coupure de fibres.

La continuité des fibres F est favorable à la résistance mécanique de la liaison entre le pivot 104 et la tête de fourche 102. En outre, la surface d'appui 14 sur la tête de fourche, pour le roulement 106, peut être obtenue directement de moulage.

Le roulement 106 peut être réalisé sous forme compacte, avec un diamètre intérieur de la bague intérieure 106a aussi grand que possible, pour permettre le passage d'un nombre élevé de fibres F dans la zone de liaison 107. Le taux de contrainte est ainsi diminué dans la section fragile, et la sécurité est augmentée. Selon un exemple de réalisation avantageux, mais non limitatif, le diamètre extérieur du roulement 106 est égal à 42 mm , et son diamètre intérieur égal à 33 mm.

Dans le cas où un palier lisse est installé en lieu et place du roulement 6, 106, tout ce qui a été indiqué précédemment reste valable.

La fourche selon l'invention, dont le pivot est combiné avec un roulement 6, 106 compact ou un palier lisse, offre davantage de libertés pour la construction de la bicyclette. La fourche peut être choisie indépendamment de la douille 5, 105 ce qui permet d'établir une gamme en jouant sur le diamètre de la douille tout en utilisant le même roulement 6, 106. On obtient un meilleur comportement mécanique, et on peut utiliser la direction intégrée sur certains cadres actuels.

## Revendications

1. Fourche de bicyclette, prévue pour être montée dans une douille (5) de cadre de bicyclette, comprenant une tête de fourche (2) d'où partent deux fourreaux (3a, 3b) et, du côté opposé aux fourreaux, un pivot tubulaire (4, 104) comportant une partie basse cylindrique (4a, 104a) solidaire de la tête de fourche, et une partie haute cylindrique (4b) pour la fixation d'une potence (P), **caractérisée par le fait que** :
- la partie haute cylindrique (4b) est prévue pour sortir de la douille (5) de cadre et pour être entourée par la potence (P),
- le diamètre extérieur (Da) de la partie basse cylindrique (4a, 104a) du pivot est supérieur au diamètre extérieur (Db) de la partie haute cylindrique (4b) de ce pivot, et une zone de transition (4c) assure la liaison entre les deux parties (4a, 104a ; 4b) de diamètres différents du pivot (4, 104),
- la zone de transition (4c) du pivot présente une surface extérieure tronconique dont le diamètre extérieur diminue de bas en haut,
- la fourche est réalisée en matériau composite d'une seule pièce avec le pivot.

2. Fourche de bicyclette selon la revendication 1, **caractérisée par le fait que** le pivot (4) présente une cavité intérieure cylindrique (8) à section intérieure circulaire dont le diamètre reste constant de bas en haut suivant toute la longueur du pivot et que deux cloisons diamétrales à angle droit, sont prévues dans la cavité cylindrique (8) pour renforcer le pivot.

3. Fourche de bicyclette selon la revendication 1 ou 2, **caractérisée par le fait que** le diamètre (Db) de la partie haute du pivot est égal à un diamètre standard d'un pivot de bicyclette.

4. Fourche de bicyclette selon la revendication 3, **caractérisée par le fait que** le diamètre (Db) de la partie haute du pivot est égal à l'une des deux valeurs 25,4 mm et 28,6 mm.

5. Fourche de bicyclette selon l'une des revendications précédentes, **caractérisée par le fait que** le diamètre (Da) de la partie basse (4a, 104a) du pivot est supérieur d'au moins 5%, cinq pour cent, au diamètre (Db) de la partie haute.

6. Fourche de bicyclette selon la revendication 5, **caractérisée par le fait que** le diamètre (Da) de la partie basse (4a, 104a) du pivot est supérieur d'au moins 12%, douze pour cent, au diamètre (Db) de la partie haute.

7. Fourche de bicyclette selon l'une des revendications précédentes, **caractérisée par le fait que** la surface extérieure de la zone de liaison (107) entre le pivot (104) et la tête de fourche (102) comporte une surface tronconique (14) pour servir d'appui à une surface conjuguée d'une bague intérieure de roulement.

8. Fourche de bicyclette selon la revendication 7, **caractérisée par le fait que** les fibres (F) du matériau composite sont continues dans la zone de liaison (107) du pivot (104) à la tête de fourche (102).

## Claims

1. A bicycle fork, provided for being mounted in a bushing (5) of a bicycle frame, comprising a fork crown (2) from where there extend two fork stems (3a, 3b) and, on the opposite side to the fork stems, a tubular pivot (4, 104) comprising a cylindrical bottom part (4a, 104a) secured to the fork crown, and a cylindrical top part (4b) for securing a handlebar stem (P), **characterized in that :**
- the cylindrical top part (4b) is provided to project over the bushing (5) of the frame and to be surrounded by the handlebar stem (P),
- the outside diameter (Da) of the cylindrical bottom part (4a, 104a) of the pivot is greater than the outside diameter (Db) of the cylindrical top part (4b) of this pivot, and a transition region (4c) provides the link between the two different diameter parts (4a, 104a; 4b) of the pivot (4, 104),
- the transition region (4c) of the pivot has a frustoconical exterior surface, the outside diameter of which decreases from the bottom upward,
- the fork is made of composite, as a single piece with the pivot.

2. The bicycle fork as claimed in claim 1, **characterized in that** the pivot (4) has a cylindrical cavity (8) of circular cross section, the diameter of which remains constant from the bottom to the top along the entire length of the pivot, and two diametral partitions at right angles are provided in the cylindrical cavity (8) to strengthen the pivot.

3. The bicycle fork as claimed in claim 1 or 2, **characterized in that** the diameter (Db) of the top part of the pivot is equal to a standard bicycle pivot diameter.

4. The bicycle fork as claimed in claim 3, **characterized in that** the diameter (Db) of the top part of the pivot is equal to one of the two values 25,4 mm and 28,6 mm.

5. The bicycle fork as claimed in one of the preceding claims, **characterized in that** the diameter (Da) of the bottom part (4a, 104a) of the pivot is at least 5%, five percent, greater than the diameter (Db) of the top part.

6. The bicycle fork as claimed in claim 5, **characterized in that** the diameter (Da) of the bottom part (4a, 104a) of the pivot is at least 12%, twelve percent, greater than the diameter (Db) of the top part.

7. The bicycle fork as claimed in one of the preceding claims, **characterized in that** the exterior surface of the connecting region (107) linking the pivot (104) and the fork crown (102) has a frustoconical surface (14) to act as a support for a mating surface of an inner ring of a rolling bearing.

8. The bicycle fork as claimed in claim 7, **characterized in that** the fibers (F) of the composite are continuous in the connecting region (107), from the pivot (104) to the fork crown (102).

## Patentansprüche

1. Fahrradgabel zur Montage in ein Führungsrohr (5) eines Fahrradrahmens, mit einem Gabelkopf (2), von dem zwei Gabelbeine (3a, 3b) ausgehen, und einem Steuerrohr (4, 104) auf der den Gabelbeinen gegenüberliegenden Seite, das einen mit dem Gabelkopf festhaltenden, unteren, zylinderförmigen Teil (4a, 104a) und einen oberen zylinderförmigen Teil (4b) zur Befestigung eines Auslegers (P) aufweist, **dadurch gekennzeichnet dass:**
- der obere zylinderförmige Teil (4b) dazu vorgesehen ist, aus dem Führungsrohr (5) des Rahmens herauszuragen und von dem Ausleger (P) umfangen zu werden,
- der Aussendurchmesser (Da) des unteren, zylinderförmigen Teils (4a, 104a) des Steuerrohrs größer ist als der Aussendurchmesser (Db) des oberen, zylinderförmigen Teils (4b) dieses Steuerrohrs, und dass eine Übergangszone (4c) die beiden Teile (4a, 104a; 4b) unterschiedlichen Durchmessers des Steuerrohrs (4, 104) miteinander verbindet,
- die Übergangszone (4c) des Steuerrohrs eine kegelstumpfartige Außenfläche aufweist, deren Aussendurchmesser von unten nach oben abnimmt,
- die Gabel einstückig mit dem Steuerrohr aus einem Verbundmaterial hergestellt ist.

2. Fahrradgabel gemäß Anspruch 1, **dadurch gekennzeichnet, dass** das Steuerrohr (4) einen inneren, zylinderförmigen Hohlraum (8) mit einem kreisförmigen Innenquerschnitt, dessen Durchmesser über die gesamte Länge des Steuerrohrs von unten nach oben konstant bleibt, aufweist und dass zwei im rechten Winkel diametral entgegengesetzte Scheidewände in dem zylinderförmigen Hohlraum (8) vorgesehen sind, um das Steuerrohr zu verstärken.

3. Fahrradgabel gemäß Anspruch 1 oder 2, **dadurch gekennzeichnet, dass** der Durchmesser (Db) des oberen Teils des Steuerrohrs dem Standard-Durchmesser eines Steuerrohrs eines Fahrrades entspricht.

4. Fahrradgabel gemäß Anspruch 3, **dadurch gekennzeichnet, dass** der Durchmesser (Db) des oberen Teils des Steuerrohrs einem der beiden Werte 25,4 mm und 28,6 mm entspricht.

5. Fahrradgabel gemäß einem der vorhergehenden Ansprüche, **dadurch gekennzeichnet, dass** der Durchmesser (Da) des unteren Teils (4a, 104a) des Steuerrohrs um mindestens 5%, fünf Prozent, größer ist als der Durchmesser (Db) des oberen Teils.

6. Fahrradgabel gemäß Anspruch 5, **dadurch gekennzeichnet, dass** der Durchmesser (Da) des unteren Teils (4a, 104a) des Steuerrohrs um mindestens 12%, zwölf Prozent, größer ist als der Durchmesser (Db) des oberen Teils.

7. Fahrradgabel gemäß einem der vorhergehenden Ansprüche, **dadurch gekennzeichnet, dass** die Außenfläche der Verbindungszone (107) zwischen dem Steuerrohr (104) und dem Gabelkopf (102) eine Kegelstumpffläche (14) aufweist, die zur Auflage für eine an einen inneren Lagerring angeformte Fläche dient.

8. Fahrradgabel gemäß Anspruch 7, **dadurch gekennzeichnet, dass** die Fasern (F) des Verbundmaterials in der Verbindungszone (107) vom Steuerrohr (104) zum Gabelkopf (102) durchgehend sind.
